# EUROPEAN PATENT SPECIFICATION

(11) **EP 1 576 688 B1**
(45) Date of publication and mention of the grant of the patent: **21.04.2010**
(21) Application number: 03797008.4
(22) Date of filing: 15.12.2003
(51) Int. Cl.: H01M 10/052, H01M 4/485, H01M 4/505, H01M 4/525, H01M 4/62, H01M 4/131

(54) **CATHODE COMPOSITION FOR RECHARGEABLE LITHIUM BATTERY**
KATHODENZUSAMMENSETZUNG FÜR EINE WIEDERAUFLADBARELITHIUMBATTERIE
COMPOSITION D'UNE CATHODE POUR BATTERIE AU LITHIUM RECHARGEABLE

(30) Priority: 23.12.2002 US 328563
(43) Date of publication of application: 21.09.2005
(60) Divisional application: 09177492.7
(73) Proprietor: 3M Innovative Properties Company, St. Paul MN 55133-3427 (US)
(72) Inventor: LE, Dinh Ba,, Saint Paul, MN 55133-3427 (US)
(74) Representative: Vossius & Partner
(86) International application number: PCT/US2003/039747
(87) International publication number: WO 2005/011044

(56) References cited:
- US-A- 5 948 569
- US-B1- 6 277 521

## Description

### FIELD

This invention relates to non-fully delithiatable cathode compositions for rechargeable lithium batteries. In other aspects, this invention also relates to processes for preparing the compositions, to compositions produced thereby, to lithium electrochemical cells comprising the compositions, and to lithium batteries comprising the cells.

### BACKGROUND

Rechargeable (secondary) lithium batteries (and their component electrochemical cells) typically comprise an anode, an electrolyte, and a cathode that contains lithium in the form of a lithium transition metal oxide. Examples of lithium transition metal oxides that have been used for cathodes include lithium cobalt oxide, lithium vanadium oxide, lithium nickel oxide, and various lithium manganese oxides. Sulfides or phosphates have also been used.

Lithium cobalt oxide (LiCoO₂) is the most widely used cathode active material in commercial secondary lithium ion batteries. It has a theoretical capacity of about 280 mAh/g. In current commercial cells, however, only about 140 mAh/g of its capacity is used when cycled to about 4.3V (versus lithium). More of its theoretical capacity could be used if the useful voltage range could be increased, but attempts to cycle LiCoO₂ above 4.3 V have typically resulted in capacity loss after repeated cycling. It is believed that this has been due to reaction of the oxide with electrolyte at higher voltages.

Attempts have been made to protect certain cathode compositions from reaction with electrolyte. For example, there have been attempts to prevent the dissolution of Mn in spinel cathodes and to prevent the degradation of FeS₂ cathodes during charging or overdischarging. However, these attempts have generally involved cathode active materials that are "fully delithiatable" (fully delithiated during charging of the cell). Unlike "non-fully delithiatable" cathode active materials such as LiCoO₂ (which typically has only half of its lithium removed when charged (for example, to Li_{0.5} CoO₂)), no additional capacity can be obtained with these materials by increasing the voltage range of the charge. Thus, there is no need to stabilize the materials at higher voltages to access extra capacity.

At least one attempt has been made to prevent degradation of LiCoO₂ cathodes during charging or overdischarging. This involved electrochemically forming a protective film on the cathode after battery assembly. However, this attempt was not carried out at voltages above 4.3 V where extra capacity is theoretically obtainable.

Other treatments of lithium transition metal oxide cathode active materials have been directed at improving their structural and/or thermal stability and have generally involved multiple steps (for example, coating, drying, and/or heat treatment steps). Such treatments have included, for example, the use of starting coating materials such as aluminum alkoxides, which form hydroxides (electrochemically active) at low temperatures and chemically bond to the cathode active material at higher temperatures.

### SUMMARY

Thus, we recognize that there is a need for cathode compositions for rechargeable lithium batteries that are electrochemically stable (for example, stable to oxidation and reduction degradation) at high voltages and that can be simply and cost-effectively prepared without the need for multiple process steps.

Briefly, in one aspect, this invention provides such a composition, which consists essentially of a blend of (a) particles of at least one non-fully delithiatable cathode active material; and (b) nanoparticles of at least one electrochemically inactive metal oxide; the cathode active material and the metal oxide being present only as separate phases that have essentially no chemical bonding between them (no mixed phase).

It has been discovered that non-fully delithiatable cathode active materials can be electrochemically stabilized by the addition of electrochemically inactive metal oxides. For example, simple physical blending or mixing of particles of the cathode active material and particles of the metal oxide produces a cathode composition that exhibits surprisingly enhanced capacity and cycling capability (relative to the cathode active material alone). The cathode composition is especially advantageous when used at voltages higher than the stable voltage window of the cathode active material (that is, voltages above the point where the material exhibits a sharp drop in capacity due to oxidative and reductive degradation through reaction with electrolyte) and enables access to the extra capacity of the material. Thus, the composition meets the need in the art for cathode compositions for rechargeable lithium batteries that exhibit electrochemical stability at high voltages and that can be simply and cost-effectively prepared without the need for multiple process steps.

In other aspects, this invention also provides a process for preparing the cathode composition of the invention, the process comprising the step of mixing (preferably, by dry blending) particles of component (a) and particles of component (b); a composition produced by the process; a lithium electrochemical cell comprising the composition; and a lithium battery comprising at least one lithium electrochemical cell.

### BRIEF DESCRIPTION OF DRAWING

These and other features, aspects, and advantages of the present invention will become better understood with regard to the following description, appended claims, and accompanying drawing, wherein:
Figure 1 is a plot of capacity versus number of cycles for the cathode compositions described in Comparative Example 1 (no alumina) and Examples 1, 2, and 3 (various amounts of added alumina).
Figure 2 is a plot of capacity versus number of cycles for the cathode compositions described in Comparative Example 1 and Example 2 (cycling in a broader voltage window of 3.0 V to 4.5 V and 4.55 V(versus Li)).
Figure 3 is a plot of differential capacity versus voltage for the cathode composition described in Comparative Example 1 (cycling in a broader voltage window of 3.0 V to 4.5 V(versus Li)).
Figure 4 is a plot of differential capacity versus voltage for the cathode composition described in Comparative Example 1 (cycling in a broader voltage window of 3.0 V to 4.55 V(versus Li)).
Figure 5 is a plot of differential capacity versus voltage for the cathode composition described in Example 2 (cycling in a broader voltage window of 3.0 V to 4.5 V(versus Li)).
Figure 6 is a plot of differential capacity versus voltage for the cathode composition described in Example 2 (cycling in a broader voltage window of 3.0 V to 4.55 V(versus Li)).
Figure 7 is a plot of 10msec cell impedance versus number of cycles for the cathode compositions described in Comparative Example 1 and Example 2.
Figure 8 is a plot of 15 min cell impedance versus number of cycles for the cathode compositions described in Comparative Example 1 and Example 2.
Figure 9 is a plot of capacity versus number of cycles for the cathode compositions described in Comparative Example 2 and Example 4.

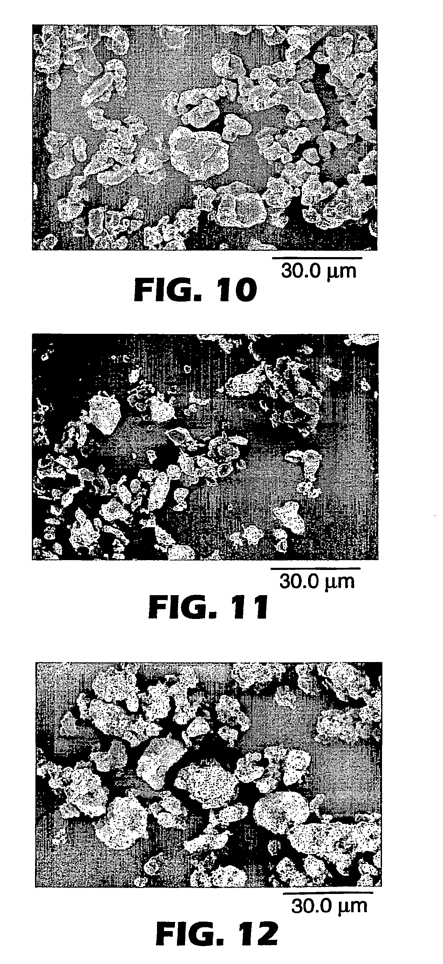

Figure 10 is a scanning electron micrograph of the cathode composition described in Comparative Example 1 at 1000x magnification.
Figure 11 is a scanning electron micrograph of the cathode composition described in Example 2 at 1000x magnification.
Figure 12 is a scanning electron micrograph of the cathode composition described in Example 3 at 1000x magnification.

### DETAILED DESCRIPTION

### Definitions

As used in this patent application:
"lithium electrochemical cell" and "lithium battery" mean a cell or battery that uses lithium either as the negative electrode (in a metallic form or in an alloy form with other metals) or as the active cation species. Examples include a cell or battery with a lithium metal negative electrode; a cell or battery with graphite as the active negative electrode into which lithium ion intercalates during charging; and a cell or battery with a lithium alloy as the negative electrode;
"non-fully delithiatable cathode active material" means an electrochemically active cathode material that cannot be fully delithiated during charging of a cell or battery without undergoing a change of structure (for example, full delithiation of LiNiO₂ provides NiO₂, which is unstable and converts to NiO and oxygen);
"electrochemically inactive" means a material that does not intercalate or alloy lithium and does not undergo reduction and oxidation under the charging/discharging operating conditions of a cell or battery; and "chemical bonding" means covalent bonding and/or ionic bonding but excluding physical bonding interaction such as hydrogen bonding and electrostatic attraction.

### Non-fully Delithiatable Cathode Active Material

Cathode active materials useful in the cathode composition of the invention are those that are non-fully delithiatable. Representative examples of such materials include lithium transition metal oxides such as LiV₃O₈ and LiMO₂, where M represents one or more metals selected from the group consisting of nickel, aluminum, cobalt, and manganese (for example, LiCoO₂, LiNiO₂, oxides comprising nickel and aluminum, and oxides comprising nickel and manganese such as LiNi_{0.375}Co_{0.25}Mn_{0.375}O₂, LiNi_{0.1}Co_{0.8}Mn_{0.1}O₂, and LiNi_{1/3}Co_{1/3}Mn_{1/3}O₂); and mixtures thereof.

Preferred cathode active materials include LiCoO₂ and lithium oxides comprising nickel and manganese (with LiCoO₂ and LiNi_{0.375}Co_{0.25}Mn_{0.375}O₂ being more preferred and LiCoO₂ being most preferred) and mixtures thereof. Materials that are not "non-fully delithiatable" and thus not useful in the cathode composition of the invention include , for example, LiTiO₂, LiTiS₂, LiSnO, LiMoO₃, LiCrO₃, LiPbO, LiFe₂0₃, LiAg₂V₄O₁₁, LiCFₓ, LiV₂0₅, LiFeS₂, and LiMn₂O₄.

Preferably, the cathode active material is in the form of particles (more preferably, substantially spherical particles). Large particles are generally desirable. Generally, suitable particles include microparticles (less than about 100 micrometers in average diameter, where "diameter" refers not only to the diameter of substantially spherical particles but also to the longest dimension of non-spherical particles). The average diameter of the particles preferably ranges from about 1 micrometer to about 20 micrometers, more preferably from about 5 micrometers to about 10 micrometers.

### Electrochemically Inactive Metal Oxide

Metal oxides suitable for use in the cathode composition of the invention are those that are electrochemically inactive. Preferably, the metal oxides are also electrically non-conductive, lithium ion permeable, relatively low in density, thermally stable, and relatively electrochemically and chemically inert to reaction with typical battery electrolytes. The metal oxides can be either hydrophobic or hydrophilic in nature.

Representative examples of useful metal oxides include the hydrophobic and hydrophilic forms of Al₂O₃, SiO₂, MgO, TiO₂, SnO₂, B₂O₃, Fe₂O₃, ZrO₂, and mixtures thereof. Preferred metal oxides include Al₂O₃, SiO₂, and mixtures thereof (with Al₂O₃ being more preferred).

Preferably, the metal oxide is in the form of particles (more preferably, substantially spherical particles). Small, relatively non-agglomerated particles are generally desirable. Suitable particles generally include nanoparticles (less than about 100 nanometers in average diameter, where "diameter" refers not only to the diameter of substantially spherical particles but also to the longest dimension of non-spherical particles). Preferably, the average diameter of the particles is less than about 30 nanometers, more preferably less than about 15 nanometers.

### Preparation of Cathode Composition

The cathode composition of the invention can be prepared by mixing the cathode active material and the metal oxide. Preferably, a method of mixing that is capable of providing an intimate mixture or blend of the particles of each of the two components is utilized (for example, use of a mortar and pestle, a ball mill, a jet mill, a rod mill, or a high shear blender). Mixing can be carried out in the presence of one or more inert solvents (for example, hydrocarbons such as heptane and hexane, or ketones such as 2-butanone), if desired, with subsequent solvent removal. However, dry blending (preferably, using a jet mill) is generally preferred.

The cathode composition "consists essentially" of the cathode active material and the metal oxide. That is, the cathode composition can further comprise conventional cathode additives, if desired, provided that the additives do not significantly interfere with the intimate contact of the cathode active material and the metal oxide (that is, the additives do not react with the metal oxide and do not displace the metal oxide from the surface of the cathode active material. Poly(alkylene oxides), for example, cannot be included in the composition, as they tend to complex with the metal oxide and prevent it from intimately contacting the cathode active material. Thus, the cathode composition comprises the cathode active material and the metal oxide, with the proviso that no poly(alkylene oxide) is present.

Useful non-interfering additives include binders such as polyvinylidenefluoride (PVDF), polytetrafluoroethylene, ethylene-propylene-diene (EPDM) terpolymer, emulsified styrene-butadiene rubber (SBR), and the like; and conductive agents such as carbon (for example, VULCAN VXC-72 (Cabot Corporation)) and the like. The conventional additives can be added prior to mixing the cathode active material and the metal oxide, but, preferably, they are added after the cathode active material and the metal oxide have been mixed. This facilitates the intimate mixing of the active material and the oxide. Preferably, at least about 50 percent of the cathode active particles are in contact with metal oxide particles.

The amount of metal oxide that can be included in the composition will vary, depending upon the particle sizes, chemical nature, and surface morphology of the cathode active material and the metal oxide. However, for the preferred particle sizes set forth above, the metal oxide can generally be present in the composition in amounts ranging from about 1 to about 10 percent by weight, based on the total weight of the composition. Conventional additives can be present in amounts up to about 10 percent by weight (based on the total weight of the composition).

Unlike prior compositions, the metal oxide of the composition of the invention does not exist as a film or shell covering a core of the cathode active material, and there is essentially no chemical bonding between them. Rather, the composition is a physical mixture of the two components, which exist as separate phases with no mixed phase (comprising the product of a chemical reaction between the two) present. The metal oxide particles appear to be adsorbed on the surface of the particles of the cathode active material, with essentially no insertion of the metal oxide into the crystal lattice of the active cathode material (which would undesirably tend to decrease initial capacity). Preferably, the surface of the particles of cathode active material is at least partially covered with metal oxide particles (more preferably, the surface is substantially covered but still allows transport of lithium to and from the active particles).

### Cell and Battery

The cathode composition of the invention can be used to prepare lithium electrochemical cells (comprising the composition, a non-aqueous electrolyte, and an anode) and lithium batteries comprising one or more of the electrochemical cells. Such cells and batteries, when cycled above the stable voltage window of the cathode active material (for example, above 4.3 volts for LiCoO₂), generally exhibit a greater capacity and cycle life than the same cell or battery comprising a corresponding cathode composition without inactive metal oxide.

The cathode composition can be applied (for example, by coating or extrusion) to a current collector or electrolyte or other substrate. The resulting cathode film can then be assembled into a cell or battery in a conventional manner with electrolyte, separator, and anode. The separator can comprise a porous, non-conductive material (for example, microporous polyethylene film having a thickness of about 25 micrometers and a porosity of about 40 percent).

Examples of suitable anodes include lithium metal, graphite, and lithium alloy compositions (for example, of the type described in U.S. Patent No. 6,203,944 (Turner) entitled "Electrode for a Lithium Battery" and U.S. Patent No. 6,225,017 (Turner) entitled "Electrode Material and Compositions"). Graphite is commonly used.

The electrolyte can be a liquid, a gel, or a solid (often a liquid). Examples of solid electrolytes include polymeric electrolytes such as polyethylene oxide, polytetrafluoroethylene, fluorine-containing copolymers, and combinations thereof. Examples of liquid electrolytes include ethylene carbonate, diethylene carbonate, propylene carbonate, and combinations thereof. Examples of gel electrolytes are blends of the liquid and solid electrolytes. The electrolyte generally further comprises a lithium electrolyte salts. Examples of suitable salts include LiPF₆, LiBF₄, and LiClO₄. The electrolyte can also further comprise one or more conventional additives (for example, anode-stabilizing additives).

### EXAMPLES

Objects and advantages of this invention are further illustrated by the following examples, but the particular materials and amounts thereof recited in these examples, as well as other conditions and details, should not be construed to unduly limit this invention.

### Comparative Example 1

### Untreated LiCoO₂

1.8 g LiCoO₂ (NIPPON C10, Nippon Chemical Industrial Co. LTD, Kotu-Ku, Japan; determined by scanning electron microscopy (SEM) to be about 5-10 micrometers in average diameter) was blended with 0.1 g SUPER S conductive carbon (MMB CARBON, Belgium) by mortar and pestle. To this was added 1 g of polyvinylidene fluoride (PVDF) solution (10% in N-methyl-2-pyrrolidinone (NMP)) and 1.5 g of additional NMP (Burdick and Jackson, Muskegon, MI). The resulting mixture was blended in a four-blade, air-driven, high shear mixer for 20 minutes. The resulting solution was coated on to an Al foil with a 15-mil (0.381 mm) gap die. The coated sample was then dried in an air convection oven at 120°C for 1hr, followed by drying in a vacuum oven at 120°C for 12 hrs. Disks of 16-mm diameter were punched out for use as cathodes in 2325 coin cells. Each 2325 cell consisted of an 18-mm diameter disk of aluminum spacer (31-mil (0.787 mm) thick), a 16-mm diameter disk of cathode, a 20-mm diameter microporous separator (CELGARD 2400, Celgard Inc., Charlotte, NC), 18-mm diameter x 0.38 mm thick lithium (Aldrich, Milwaukee, WI), and an 18-mm diameter copper spacer (18-mil (0.457 mm) thick). 100 microliters of electrolyte (1M LiPF₆ (Stella Chemifa Corp., Osaka, Japan) in a mixture of 1 part by weight ethylene carbonate and 2 parts by weight diethylene carbonate (Grant Chemical, Baton Rouge, Louisiana)) was used.

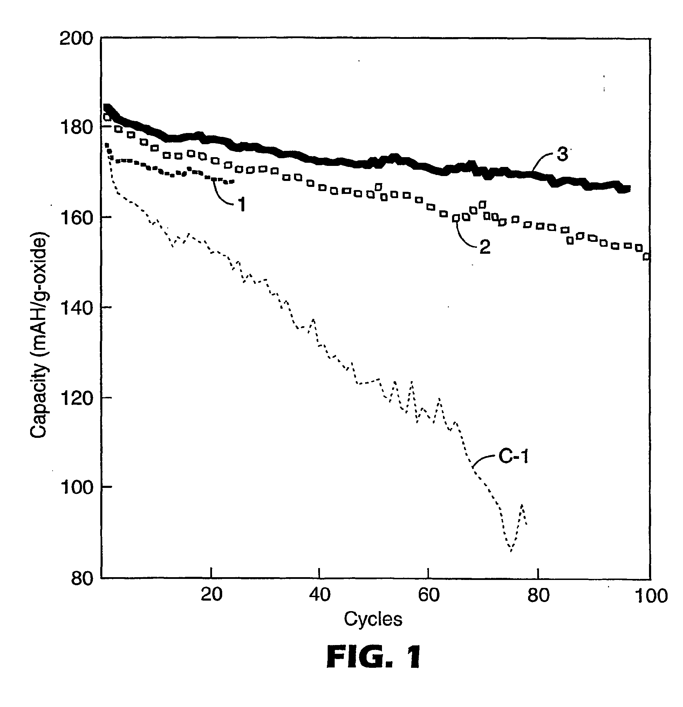

Electrochemical evaluation was performed on a Maccor^{™} cycler (Maccor, Inc., Tulsa, OK) at room temperature using the following cycling protocol: Charge at 30 mA/g (of cathode active material) rate to 4.5 V. Hold at 4.5 V until current reaches 0.1 mA. Discharge at 30 mA/g (of cathode active material) rate to 3.6 V. Rest for 15 minutes. Repeat. Cell performance (specific capacity based on the cathode active material) is shown in Figure 1.

### Example 1

### LiCoO₂ Treated With 2.5% Weight Percent Alumina (Based on the Weight of LiCoO₂ and Alumina)

A cathode composition and coin cells were prepared essentially as in Comparative Example 1, except that 1.755 g of LiCoO₂ was blended with 0.045 g fumed alumina (ALUMINUM OXIDE C, Degussa, Franfurt, Germany) by mortar and pestle before mixing with the SUPER S and PVDF.

Electrochemical evaluation was performed essentially as described in Comparative Example 1. Cell performance is shown in Figure 1.

### Example 2

### LiCoO₂ Treated With 5 Weight Percent Alumina (Based on the Weight of LiCoO₂ and Alumina)

A cathode composition and coin cells were prepared essentially as in Example 1, except that 1.71 g LiCoO₂ was blended with 0.09 g fumed alumina by mortar and pestle before mixing with the SUPER S and PVDF.

Electrochemical evaluation was performed essentially as described in Comparative Example 1. Cell performance is shown in Figure 1.

### Cycling of Cathode Compositions in a Broader Voltage Window of 3.0 V to 4.5 V and 4.55 V (Versus Lithium)

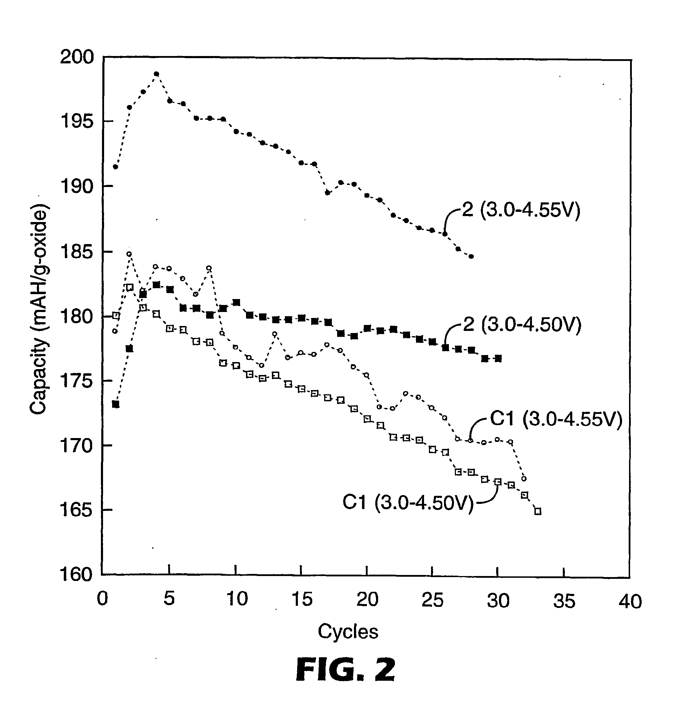

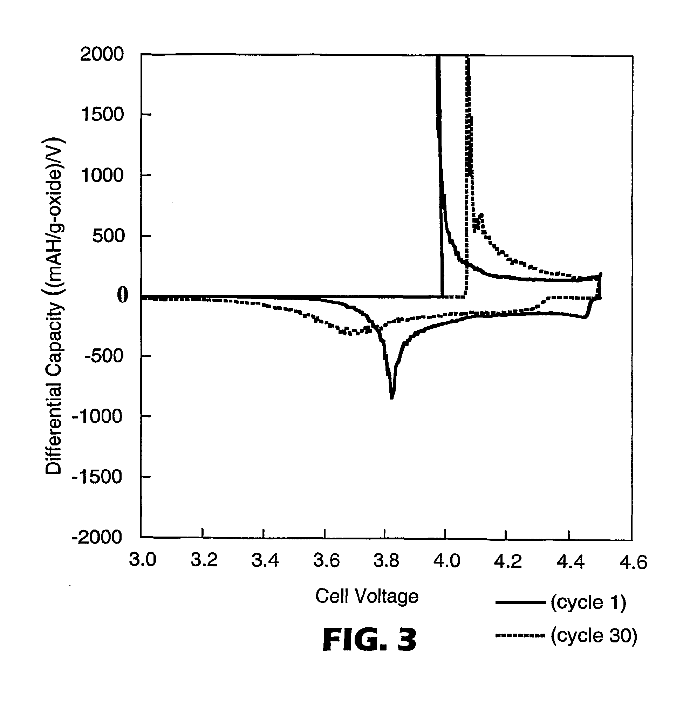

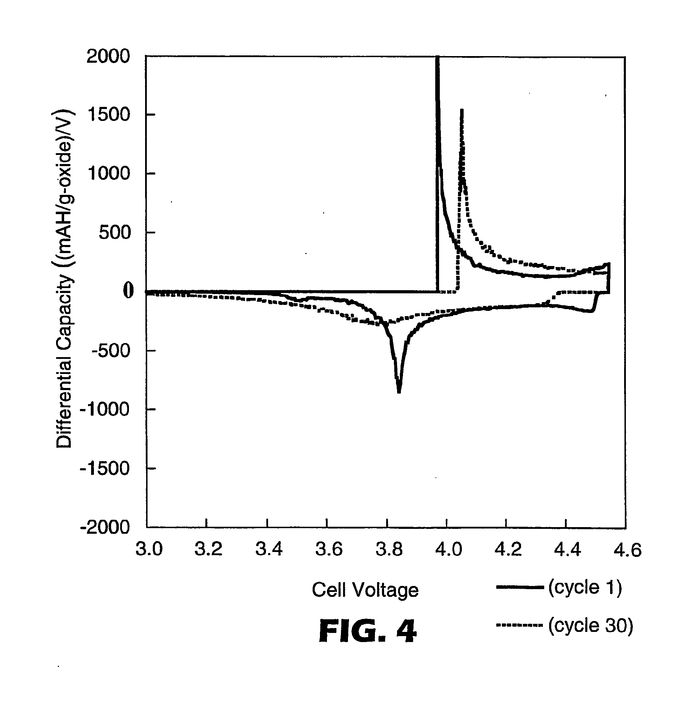

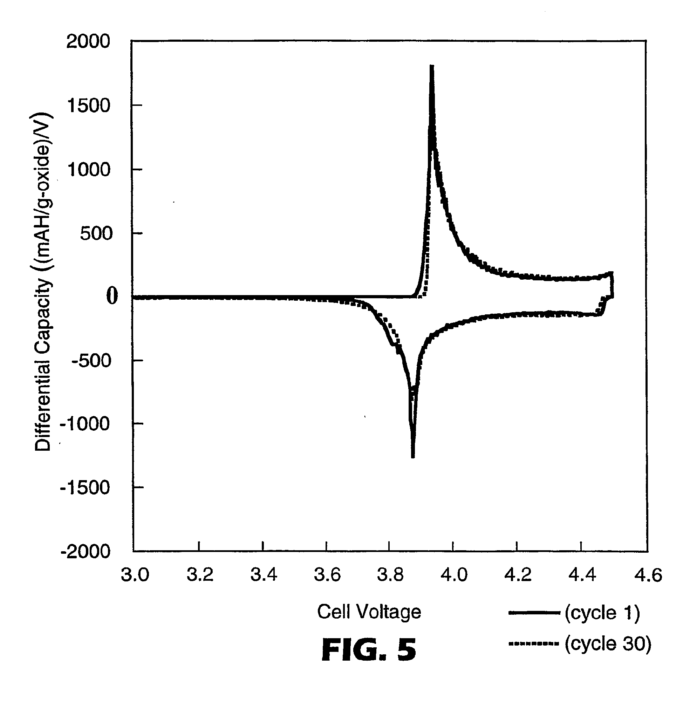

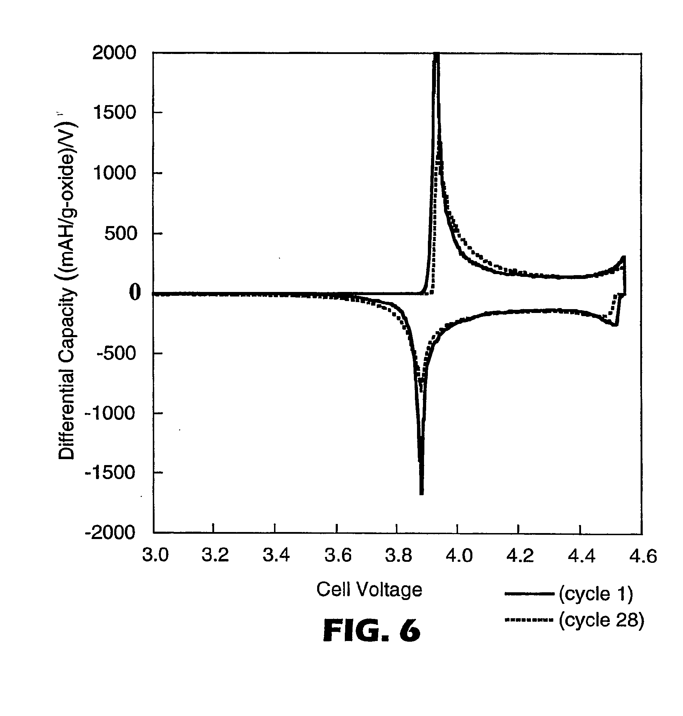

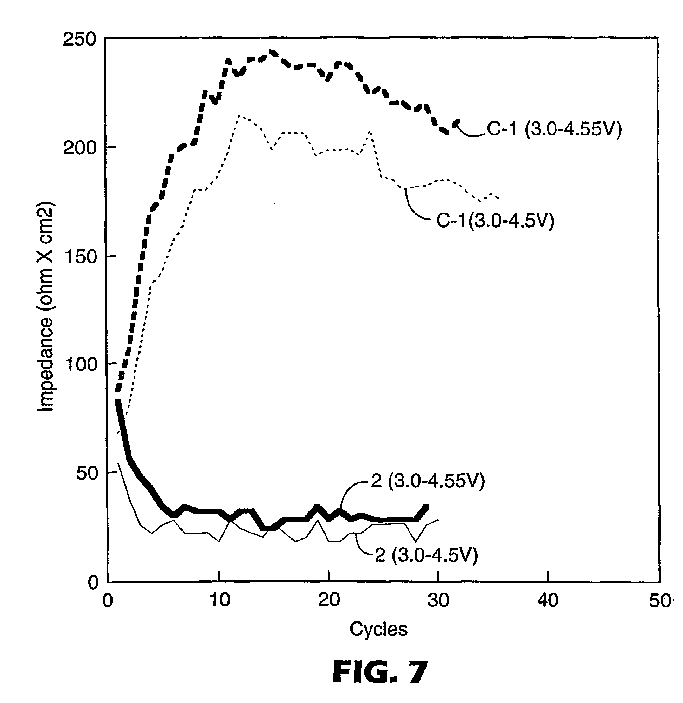

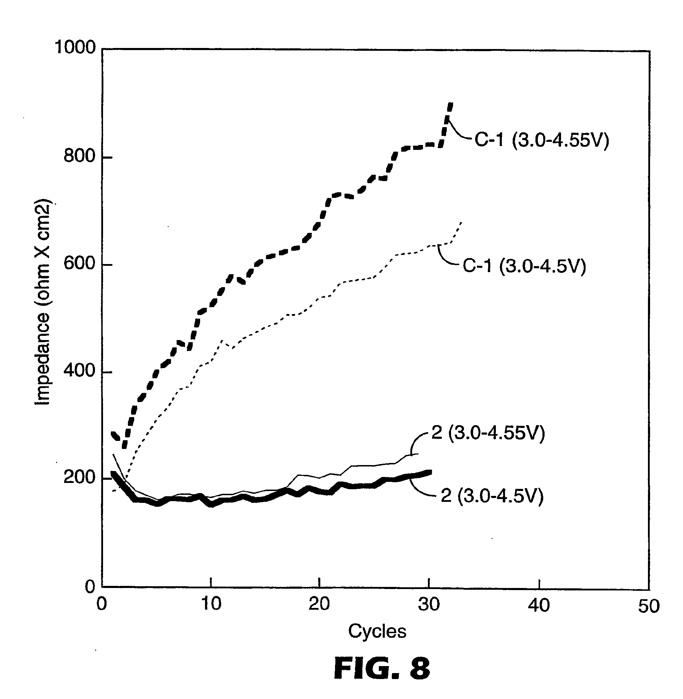

Cell cycling was evaluated for the cathode compositions of Comparative Example 1 and Example 2 using the following cycling protocol with set voltage and relaxation after charge to evaluate cell impedances: Charge at 30 mA/g (of cathode active material) rate to 4.5 V (or 4.55 V). Hold at 4.5 V (or 4.55 V) until current reaches 0.1 mA. Rest for 10 msec or for 15 minutes. Discharge at 30 mA/g (of cathode active material) rate to 3.0 V. Rest for 15 minutes. Repeat. Cell performance is shown in Figure 2 (specific capacity based on the cathode active material versus number of cycles); Figures 3, 4, 5, and 6 (differential capacity based on the cathode active material versus voltage); and Figures 7 and 8 (cell impedance for 10-msec relaxation (Figure 7) and 15-minute relaxation (Figure 8), respectively, versus number of cycles).

### Example 3

### LiCoO₂ Treated With 10 Weight Percent Alumina (Based on the Weight of LiCoO₂ and Alumina)

A cathode composition and coin cells were prepared essentially as in Example 1, except that 1.62 g LiCoO₂ was blended with 0.18 g fumed alumina by mortar and pestle before mixing with the SUPER S and PVDF.

Electrochemical evaluation was performed essentially as described in Comparative Example 1. Cell performance is described in Figure 1.

### Example 4

### LiNi_{0.375}Co _{0.25}Mn_{0.375}O₂ Treated With 5 Weight Percent Alumina (Based on the Weight of LiNi_{0.375}Co _{0.25}Mn_{0.375}O₂ and Alumina)

A cathode composition and coin cells were prepared essentially as in Example 2, except that 1.71 g of LiNi_{0.375}Co _{0.25}Mn_{0.375}O₂ was blended with 0.09 g fumed alumina by mortar and pestle before mixing with the SUPER S and PVDF.

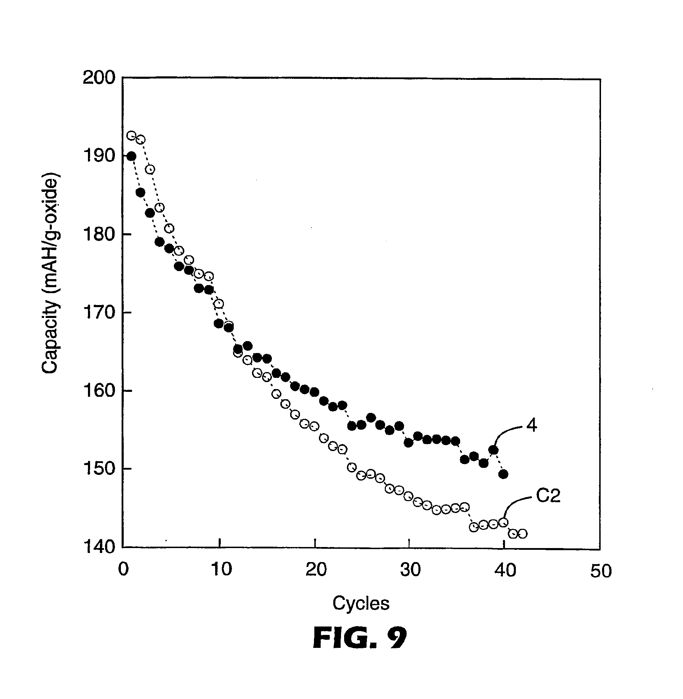

Electrochemical evaluation was performed essentially as described in Comparative Example 1. Cell performance is shown in Figure 9.

### Comparative Example 2

### Untreated LiNi_{0.375}Co _{0.25}Mn_{0.375}O₂

A cathode composition and coin cells were prepared essentially as in Comparative Example 1, except that LiNi_{0.375}Co _{0.25}Mn_{0.375}O₂ was used in place of LiCoO₂.

Electrochemical evaluation was performed essentially as described in Comparative Example 1. Cell performance is shown in Figure 9.

Various modifications and alterations to this invention will become apparent to those skilled in the art without departing from the scope and spirit of this invention. It should be understood that this invention is not intended to be unduly limited by the illustrative embodiments and examples set forth herein and that such examples and embodiments are presented by way of example only, with the scope of the invention intended to be limited only by the claims set forth herein as follows:

## Claims

1. A cathode composition consisting essentially of a blend of (a) particles of at least one non-fully delithiatable cathode active material; and (b) nanoparticles of at least one electrochemically inactive metal oxide; said cathode active material and said metal oxide being present only as separate phases that have essentially no chemical bonding between them.

2. The composition of Claim 1 wherein said non-fully delithiatable cathode active material is selected from the group consisting of LiV₃O₈; LiMO₂, where M represents one or more metals selected from the group consisting of nickel, aluminum, cobalt, and manganese; and mixtures thereof.

3. The composition of Claim 1 wherein said particles of component (a) are microparticles.

4. The composition of Claim 1 wherein said electrochemically inactive metal oxide is a hydrophobic or hydrophilic metal oxide selected from the group consisting of Al₂O₃, SiO₂, MgO, TiO₂, SnO₂, B₂O₃, Fe₂O₃, ZrO₂, and mixtures thereof.

5. The composition of Claim 1 wherein the average diameter of said nanoparticles is less than about 30 nanometers.

6. The composition of Claim 1 wherein said electrochemically inactive metal oxide constitutes from about 1 to about 10 percent by weight of said composition, based upon the total weight of the composition.

7. The composition of Claim 1 wherein at least about 50 percent of said particles of component (a) are in contact with said nanoparticles of component (b).

8. A process for preparing a cathode composition comprising the step of mixing (a) particles of at least one non-fully delithiatable cathode active material; and (b) nanoparticles of at least one electrochemically inactive metal oxide; said mixing being carried out in the absence of any additive that significantly interferes with the intimate contact of said cathode active material and said metal oxide.

9. A lithium electrochemical cell comprising the composition of Claim 1.

10. A lithium battery comprising at least one lithium electrochemical cell of Claim 9.

11. The lithium battery of Claim 10 wherein said battery, when cycled above the stable voltage window of said cathode active material, has a greater capacity and cycle life than the same battery without said electrochemically inactive metal oxide.

## Patentansprüche

1. Kathodenzusammensetzung, im Wesentlichen bestehend aus einer Mischung aus (a) Partikeln von mindestens einem nicht vollständig delithiierbaren kathodenaktiven Material; und (b) Nanopartikeln von mindestens einem elektrochemisch inaktiven Metalloxid; wobei das kathodenaktive Material und das Metalloxid nur als separate Phasen vorhanden sind, zwischen denen im Wesentlichen keine chemische Bindung vorliegt.

2. Zusammensetzung nach Anspruch 1, wobei das nicht vollständig delithiierbare kathodenaktive Material ausgewählt ist aus der Gruppe bestehend aus LiV₃O₈; LiMO₂, wo M für ein oder mehrere Metalle ausgewählt aus der Gruppe bestehend aus Nickel, Aluminium, Kobalt und Mangan steht; und Mischungen davon.

3. Zusammensetzung nach Anspruch 1, wobei die Partikel von Komponente (a) Mikropartikel sind.

4. Zusammensetzung nach Anspruch 1, wobei das elektrochemisch inaktive Metalloxid ein hydrophobes oder hydrophiles Metalloxid ausgewählt aus der Gruppe bestehend aus Al₂O₃, SiO₂, MgO, TiO₂, SnO₂, B₂O₃, Fe₂O₃, ZrO₂ und Mischungen davon ist.

5. Zusammensetzung nach Anspruch 1, wobei der durchschnittliche Durchmesser der Nanopartikel weniger als ungefähr 30 Nanometer beträgt.

6. Zusammensetzung nach Anspruch 1, wobei das elektrochemisch inaktive Metalloxid ungefähr 1 bis ungefähr 10 Gew.-% der Zusammensetzung, basierend auf dem Gesamtgewicht der Zusammensetzung, ausmacht.

7. Zusammensetzung nach Anspruch 1, wobei mindestens ungefähr 50 % der Partikel der Komponente (a) in Kontakt mit den Nanopartikeln von Komponente (b) sind.

8. Verfahren zur Herstellung einer Kathodenzusammensetzung, umfassend den Schritt des Mischens von (a) Partikeln von mindestens einem nicht vollständig delithiierbaren kathodenaktiven Material; und (b) Nanopartikeln von mindestens einem elektrochemisch inaktiven Metalloxid; wobei das Mischen unter Abwesenheit eines Additivs stattfindet, das den innigen Kontakt des kathodenaktiven Materials und des Metalloxids erheblich stört.

9. Elektrochemische Lithiumzelle, umfassend die Zusammensetzung nach Anspruch 1.

10. Lithiumbatterie, umfassend mindestens eine elektrochemische Lithiumzelle nach Anspruch 9.

11. Lithiumbatterie nach Anspruch 10, wobei die Batterie, wenn sie über dem stabilen Spannungsfenster des kathodenaktiven Materials zykliert wird, eine größere Kapazität und Zyklus-Lebensdauer aufweist als die gleiche Batterie ohne das elektrochemisch inaktive Metalloxid.

## Revendications

1. Composition de cathode consistant essentiellement en un mélange (a) de particules d'au moins un matériau de cathode actif non totalement délithiable ; et (b) de nanoparticules d'au moins un oxyde métallique électrochimiquement inactif ; ledit matériau de cathode actif et ledit oxyde métallique étant présents uniquement sous la forme de phases distinctes qui n'ont essentiellement aucune liaison chimique entre elles.

2. Composition selon la revendication 1 dans laquelle ledit matériau de cathode actif non totalement délithiable est choisi dans le groupe constitué par LiV₃O₈ ; LiMO₂, où M représente un ou plusieurs métaux choisis dans le groupe constitué par le nickel, l'aluminium, le cobalt, et le manganèse ; et les mélanges de ceux-ci.

3. Composition selon la revendication 1 dans laquelle lesdites particules de composant (a) sont des microparticules.

4. Composition selon la revendication 1 dans laquelle ledit oxyde métallique électrochimiquement inactif est un oxyde métallique hydrophobe ou hydrophile choisi dans le groupe constitué par Al₂O₃, SiO₂, MgO, TiO₂, SnO₂, B₂O₃, Fe₂O₃, ZrO₂, et les mélanges de ceux-ci.

5. Composition selon la revendication 1 dans laquelle le diamètre moyen desdites nanoparticules est inférieur à environ 30 nanomètres.

6. Composition selon la revendication 1 dans laquelle ledit oxyde métallique électrochimiquement inactif constitue environ 1 à environ 10 pour cent en poids de ladite composition, rapporté au poids total de la composition.

7. Composition selon la revendication 1 dans laquelle au moins 50 pour cent environ desdites particules de composant (a) sont en contact avec lesdites nanoparticules de composant (b).

8. Procédé pour préparer une composition de cathode comprenant l'étape consistant à mélanger (a) des particules d'au moins un matériau de cathode actif non totalement délithiable ; et (b) des nanoparticules d'au moins un oxyde métallique électrochimiquement inactif ; ledit mélange étant réalisé en l'absence de tout additif qui perturberait sensiblement le contact intime dudit matériau de cathode actif et dudit oxyde métallique.

9. Cellule électrochimique au lithium comprenant la composition selon la revendication 1.

10. Batterie au lithium comprenant au moins une cellule électrochimique au lithium selon la revendication 9.

11. Batterie au lithium selon la revendication 10, ladite batterie, lorsque soumise à un cycle au-delà de la fenêtre de tension stable dudit matériau de cathode actif, présentant une capacité et une durée de vie supérieures à celles de la même batterie sans ledit oxyde métallique électrochimiquement inactif.
